(19) **Europäisches Patentamt**
**European Patent Office**
**Office européen des brevets**

(11) **EP 4 283 339 A1**

(12) **EUROPEAN PATENT APPLICATION**
published in accordance with Art. 153(4) EPC

(43) Date of publication:
**29.11.2023 Bulletin 2023/48**

(21) Application number: **22742696.2**

(22) Date of filing: **21.01.2022**

(51) International Patent Classification (IPC):
***G01S 17/894*** (2020.01)   ***G01S 7/483*** (2006.01)
***H04N 5/374*** (2011.01)

(52) Cooperative Patent Classification (CPC):
**G01S 7/483; G01S 17/10; G01S 17/894;**
**H04N 25/76**

(86) International application number:
**PCT/JP2022/002258**

(87) International publication number:
**WO 2022/158577 (28.07.2022 Gazette 2022/30)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **22.01.2021 JP 2021008798**

(71) Applicant: **TOPPAN INC.**
**Tokyo 110-0016 (JP)**

(72) Inventors:
• **NAKAGOME Tomohiro**
**Tokyo 110-0016 (JP)**
• **TAKAHASHI Satoshi**
**Tokyo 110-0016 (JP)**

(74) Representative: **Plasseraud IP**
**66, rue de la Chaussée d'Antin**
**75440 Paris Cedex 09 (FR)**

(54) **DISTANCE IMAGE CAPTURING DEVICE AND DISTANCE IMAGE CAPTURING METHOD**

(57)     The present invention includes: a light-receiving unit including at least one pixel circuit including a photoelectric conversion element that generates charge according to incident light and N (N≥3) charge storage units that integrate the charge in a frame cycle, and a pixel drive circuit that turns on or off the transfer transistors that transmit the charge to the charge storage units at integration timing synchronizing with light pulses to distribute and integrate the charge; a light source unit that emits light pulses; a range image processing unit that calculates a distance to an object based on charge integrated in the charge storage units; and a measurement control unit that determines a measurement zone to which the measurement distance belongs and which is set according to a zone threshold that is set according to a distance, integrates charge according to an integration time set in the measurement zone, and emits light pulses by increasing a pulse period of the light pulses according to increase of the integration time.

FIG.5

**Description**

[Technical Field]

The present invention relates to range image capturing devices and range image capturing methods.
The present application claims the benefit of priority from Japanese Patent Application No. 2021-008798 filed January 22, 2021, the content of which is incorporated herein by reference.

[Background Art]

Time of flight (hereinafter referred to as TOF) type range imaging devices are known which measure the distance to an object based on the time of flight of light, using the known speed of light (e.g., see PTL 1).
Such a TOF type range imaging device includes a light source unit that emits light, and a pixel array in which a plurality of pixel circuits that detect light for measuring a distance are arranged in a two-dimensional matrix (in an array). The pixel circuits each include a photoelectric conversion element (e.g., photodiode) as a component which generates electrical charge corresponding to the intensity of light.
With this configuration, the TOF type range imaging device can acquire information on the distance between itself and the object or can capture an image of the object in a measurement space (three-dimensional space).
The TOF type range imaging device measures a distance based on delay time between the timing of emitting light and the timing of receiving light reflected by the object.
However, the electrical charge generated by the light sensor changes depending on the intensity of incident light, and thus as the distance to the object increases, the intensity of reflected light decreases (light intensity is inversely proportional to the square of the distance.).
Since the TOF type range imaging device obtains the delay time based on the electrical charge integrated in charge storage units, the measurement accuracy improves as the signal-to-noise (SN) ratio increases.
Therefore, the exposure time is changed according to the distance to the object from the TOF type range imaging device (e.g., see PTL 2). Herein, the exposure time refers to the time required for integrating the electrical charge generated by the photoelectric conversion element in the charge storage units according to the intensity of incident light.
Thus, the electrical charge exposure time is increased as the distance to the object increases so that the electrical charge integrated in the charge storage units of the TOF sensor is increased, thereby maintaining distance measurement accuracy.

[Citation List]

[Patent Literature]

PTL 1: JP 2004-294420 A
PTL 2: JP 2012-185171 A

[Summary of the Invention]

[Technical Problem]

However, in the case of a TOF sensor using pulsed emission light, when the integration time (the integration time determines exposure time and thus is a parameter similarly to exposure time) is changed, the emission time of light emitted from the laser light source also changes.
Therefore, if the integration time is simply increased due to the distance being long, the safety standards stipulating the effects on the human body (JIS C 6801 stipulating so-called eye-safety standards), e.g., the maximum permissible exposure (MPE), will not necessarily be satisfied due to the pulsed light emitted from the laser light source.
Accordingly, the integration time of electrical charge may have to be limited in order to satisfy the safety standards. Due to this limitation, electrical charge sufficient for measurement will not be necessarily integrated in the charge storage units, and therefore the measurement accuracy will not be necessarily improved.
Also, being different from the ordinarily used laser products which emit laser light avoiding the human body, TOF type range imaging devices continue emission of laser light actively and deliberately to objects including humans for the purpose of measuring a distance.

Therefore, considering the case where the objects include humans, it is necessary to perform measurement control under which the effects of laser light on humans are reduced to satisfy the safety standards (e.g., exposure is suppressed so as not to exceed the maximum permissible exposure).

Furthermore, there is a need to reduce total amount of exposure to laser light emitted to humans in a long-term timeframe.

The present invention has been made in light of such circumstances and aims to provide a range imaging device and a range imaging method which can satisfy personal safety standards (eye-safety standards) even when pulsed light is continuously emitted, and can provide a satisfactory integration time with which electrical charge required for measuring a distance can be integrated in the charge storage units.

[Solution to Problem]

In order to solve the issues described above, a range imaging device according to the present invention includes: a light-receiving unit including at least one pixel circuit including a photoelectric conversion element that generates charge according to incident light incident from a measurement space that is a space targeted for measurement, N (N>_3) charge storage units that integrate the charge in a frame cycle, and transfer transistors that transfer the charge to the charge storage units from the photoelectric conversion element, and a pixel drive circuit that turns on or off the transfer transistors for the charge storage units at predetermined integration timing synchronizing with emission of light pulses to distribute and integrate the charge; a light source unit that emits the light pulses to the measurement space; a range image processing unit that calculates a distance to an object that is present in the measurement space as a measurement distance, based on charge integrated in each of the charge storage units; and a measurement control unit that determines a measurement zone, to which the measurement distance belongs, from among measurement zones which are set according to zone thresholds which are set according to multiple distances from the light-receiving unit, integrates the charge according to an integration time set in the measurement zone as determined, and emits the light pulses by increasing a pulse period of the light pulses according to increase of the integration time.

In the range imaging device according to the present invention, the measurement control unit determines the measurement zone in which the measurement distance is included by comparing each of the zone thresholds with the measurement distance which is measured to be nearest in an arbitrary region in which the at least one pixel circuit is arranged.

A range imaging device according to the present invention includes: a light source unit that emits light pulses to a measurement space that is a space targeted for measurement; a light-receiving unit including at least one pixel circuit including a photoelectric conversion element that generates charge according to light incident from the measurement space, and N (N≥3) charge storage units that integrate the charge in a frame cycle, and a pixel drive circuit that turns on or off transfer transistors for the charge storage units at predetermined integration timing synchronizing with emission of the light pulses to distribute and integrate the charge; a range image processing unit that calculates a distance to an object that is present in the measurement space as a measurement distance, based on charge integrated in each of the charge storage units; and a measurement control unit that calculates total charge generated due to reflected light arising from reflection of the light pulses from an object in the measurement space, determines a measurement zone to which the total charge belongs using a zone threshold that is set according to the total charge, integrates the charge according to an integration time set in the measurement zone as determined, and emits the light pulses by increasing a pulse period of the light pulses according to increase of the integration time.

In the range imaging device according to the present invention, the measurement control unit may determine the measurement zone in which the total charge is included by calculating a charge ratio between greatest total charge in an arbitrary region in which the at least one pixel circuit is arranged, and reference charge that is charge generated due to reflected light arising from reflection of the light pulses from an object having an arbitrary distance and reflectance, and comparing the charge ratio with each of the zone thresholds.

In the range imaging device according to the present invention, the measurement control unit may calculate ambient light charge that is charge corresponding to ambient light based on integrated charge in the charge storage units, and may select a combination corresponding to the ambient light charge from among multiple combinations of the integration time and the pulse period in each of the measurement zones.

In the range imaging device according to the present invention, the reference charge may be set by acquiring charge generated due to reflected light from an object, using a pulse width of light pulses per unit integration time, on-time of the transfer transistors when distributing charge to the charge storage units, and the integration time in terms of unit integration time, the reference charge being set as a value smaller than storage capacity of the charge storage units.

In the range imaging device according to the present invention, the total charge may be calculated by subtracting charge generated due to ambient light from integrated charge that is charge integrated in each of the charge storage units, and adding subtraction results.

In the range imaging device according to the present invention, exposure of an object to emitted light pulses may be adjusted by allowing an emission cycle of light pulses to correspond to each of the integration times for the measurement zone, with a pulse width of the light pulses per unit integration time and on-time of the transfer transistors being constant.

The range imaging device according to the present invention, setting the reference charge for each of a predetermined distance and a predetermined reflectance, the charge ratio may have a correlation with an attenuation rate according to the distance and an attenuation rate according to the reflectance.

In the range imaging device according to the present invention, the measurement control unit may use the integration time selected in the measurement zone during a predetermined period, or may continuously use the integration time until the measurement distance is detected to be within a distance range of a measurement zone which is different from the current measurement zone.

In the range imaging device according to the present invention, the measurement control unit may use the integration time selected in the measurement zone during a predetermined period, or may continuously use the integration time until the charge ratio is detected to be within a measurement zone which is different from the current measurement zone.

In the range imaging device according to the present invention, the pixel circuit may be provided with a charge discharge circuit that discharges the charge that is generated in the photoelectric conversion element other than in a charge integration period of the charge storage units.

A range imaging method according to the present invention controls a range imaging device including at least one pixel circuit, a light source unit, a pixel drive circuit, a range image processing unit, and a measurement control unit, the at least one pixel circuit including a photoelectric conversion element, a plurality of charge storage units, and transfer transistors, and comprises steps of: emitting light pulses to a measurement space that is a space targeted for measurement, as performed by the light source unit; turning on or off the transfer transistors that transfer charge to N ($N \geq 3$) charge storage units from the photoelectric conversion element, the charge being generated by the photoelectric conversion element at predetermined timing synchronizing with emission of the light pulses, according to incident light incident from the measurement space, as performed by the pixel drive circuit; calculating a distance to an object present in the measurement space as a measurement distance, based on charge integrated in each of the charge storage units, as performed by the range image processing unit; and determining which of the measurement zones the measurement distance belongs to, the measurement zones each being set according to zone thresholds that are set according to multiple distances from the range imaging device, integrating the charge according to an integration time set in the measurement zone as determined, and emitting the light pulses by increasing a pulse period of the light pulses with increase of the integration time, as performed by the measurement control unit.

A range imaging method according to the present invention controls a range imaging device including at least one pixel circuit, a light source unit, a pixel drive circuit, a range image processing unit, and a measurement control unit, the at least one pixel circuit including a photoelectric conversion element, a plurality of charge storage units, and transfer transistors, and comprises steps of: emitting light pulses to a measurement space that is a space targeted for measurement, as performed by the light source unit; turning on or off the transfer transistors that transfer charge to N ($N \geq 3$) charge storage units from the photoelectric conversion element, the charge being generated by the photoelectric conversion element at predetermined timing synchronizing with emission of the light pulses, according to incident light incident from the measurement space, as performed by the pixel drive circuit; calculating a distance from the range imaging device to an object present in the measurement space as a measurement distance, based on charge integrated in each of the charge storage units, as performed by the range image processing unit; and calculating total charge generated due to reflected light arising from reflection of the light pulses from an object in the measurement space, based on charge integrated in each of the charge storage units, determining which of the measurement zones the total charge belongs to using a zone threshold that is set according to the total charge, integrating the charge according to an integration time set in the measurement zone as determined, and emitting the light pulses by increasing a pulse period of the light pulses with increase of the integration time, as performed by the measurement control unit.

[Advantageous Effects of the Invention]

The present invention has been made in light of such circumstances and aims to provide a range imaging device and a range imaging method which can satisfy personal safety standards (eye-safety standards) even when pulsed light is continuously emitted, and can provide a satisfactory integration time with which electrical charge required for measuring a distance can be integrated in the charge storage units.

[Brief Description of the Drawings]

Fig. 1 is a schematic block diagram illustrating a configuration of a range imaging device according to a first embodiment of the present invention.

Fig. 2 is a circuit diagram illustrating an example of a configuration of a pixel circuit 321 disposed in the range image sensor 32 in the range imaging device according to the first embodiment of the present invention.

Fig. 3 is a timing chart illustrating transfer of charge generated in the photoelectric conversion element PD to the individual charge storage units CS.

Fig. 4 is a block diagram illustrating a configuration example of a measurement control unit 43 in the range imaging device according to the first embodiment.

Fig. 5 is a diagram illustrating a relationship between a maximum permissible exposure and eye-safe level integration time and light pulse period.

Fig. 6 is a conceptual diagram illustrating measurement zone determination performed by a zone determination section 432 according to the first embodiment.

Fig. 7A is a diagram illustrating an example of an integration time table which is set for each measurement zone in a zone-specific operating condition storage 436.

Fig. 7B is a diagram illustrating an example of an integration time table which is set for each measurement zone in a zone-specific operating condition storage 436.

Fig. 7C is a diagram illustrating an example of an integration time table which is set for each measurement zone in a zone-specific operating condition storage 436.

Fig. 8 is a flowchart illustrating an example of processing for calculating a distance between a range image sensor 32 and an object S performed by the range imaging device 1 according to the first embodiment.

Fig. 9 is a conceptual diagram illustrating measurement zone determination performed by a zone determination section 432 according to a second embodiment.

Fig. 10 is a flowchart illustrating an example of processing for calculating a distance between a range image sensor 32 and an object S performed by the range imaging device 1 according to the second embodiment.

[Description of the Embodiments]

<First Embodiment>

With reference to the drawings, a first embodiment of the present invention will be described.

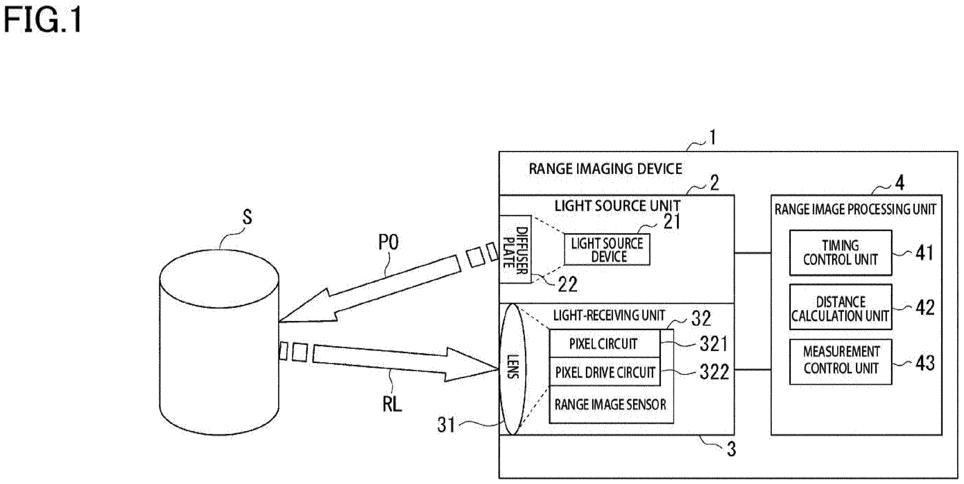

Fig. 1 is a schematic block diagram illustrating a configuration of a range imaging device according to the first embodiment of the present invention. Fig. 1 shows a range imaging device 1 that is a TOF type range imaging device including a light source unit 2, a light-receiving unit 3, and a range image processing unit 4. Fig. 1 also shows an object S whose distance is to be measured by the range imaging device 1. A range imaging device may be, for example, a range image sensor 32 (described later) in the light-receiving unit 3.

The light source unit 2 emits light pulses PO into a space as an imaging target where the object S is present whose distance is to be measured by the range imaging device 1 under the control of the range image processing unit 4. The light source unit 2 may be, for example, a surface emitting type semiconductor laser module such as a vertical cavity surface emitting laser (VCSEL). The light source unit 2 includes a light source device 21 and a diffuser plate 22.

The light source device 21 is a light source that emits laser light in the near infrared wavelength band (e.g., wavelength band of 850 nm to 940 nm) which serves as the light pulses PO to be emitted to the object S. The light source device 21 may be, for example, a semiconductor laser light emitting element. The light source device 21 emits pulsed laser light under the control of a timing control unit 41.

The diffuser plate 22 is an optical component that diffuses laser light in the near infrared wavelength band emitted from the light source device 21 over the emission surface area of the object S. Pulsed laser light diffused by the diffuser plate 22 is emitted as the light pulses PO and applied to the subject S.

The light-receiving unit 3 receives reflected light RL arising from reflection of the light pulses PO from the object S, which is an object whose distance is to be measured by the range imaging device 1, and outputs a pixel signal according to the received reflected light RL. The light-receiving unit 3 includes a lens 31 and a range image sensor 32.

The lens 31 is an optical lens that guides the incident reflected light RL to the range image sensor 32. The lens 31 outputs the incident reflected light RL toward the range image sensor 32, so that the light can be received by (be incident on) pixel circuits provided to the light-receiving region of the range image sensor 32.

The range image sensor 32 is an imaging device used for the range imaging device 1. The range image sensor 32 includes a plurality of pixel circuits 321 which are arranged in an array (two-dimensional array, or in other words, in a matrix) in a two-dimensional light-receiving region, and a pixel drive circuit 322 that controls the pixel circuits 321.

The pixel circuits 321 each include one photoelectric conversion element (e.g., photoelectric conversion element PD described later), a plurality of charge storage units (e.g., charge storage units CS1 to CS4 described later) corresponding to this photoelectric conversion element, and components that distribute charge to the individual charge storage units.

The range image sensor 32 distributes charge, which has been generated by the photoelectric conversion element under the control of the timing control unit 41, to the charge storage units. Also, the range image sensor 32 outputs pixel signals according to the charge distributed to the charge storage units. The range image sensor 32, in which a plurality of pixel circuits are arranged in a two-dimensional matrix, outputs single-frame pixel signals of the respective pixel circuits.

The range image processing unit 4 controls the range imaging device 1 and calculates a distance to the object S.

The range image processing unit 4 includes the timing control unit 41, a distance calculation unit 42, and a measurement control unit 43.

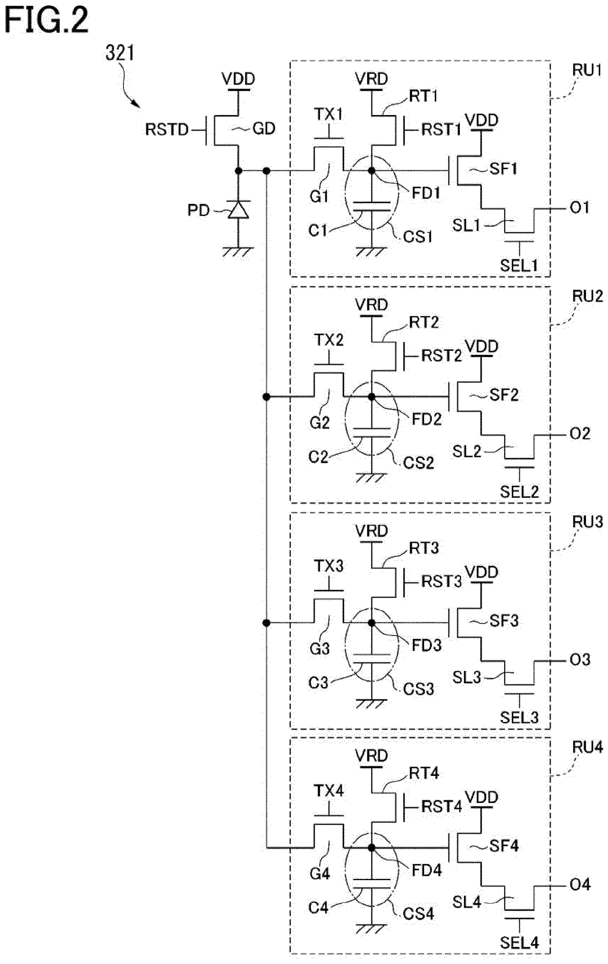

The timing control unit 41 controls timing of outputting several control signals required for measuring a distance, under the control of the measurement control unit 43. The various control signals refer to, for example, a signal for controlling emission of the light pulses PO, a signal for distributing the reflected light RL to the plurality of charge storage units, a signal for controlling the number of times of distribution per frame, and other signals. The number of times of distribution refers to the number of times of repetition of the processing for distributing charge (integration time) to the charge storage units CS (see Fig. 2).

The distance calculation section 42 outputs distance information indicating a distance to the object S calculated based on the pixel signals outputted from the range image sensor 32, under the control of the measurement control unit 43. The distance calculation unit 42 calculates a delay time Td from when the light pulses PO are emitted until when the reflected light RL is received, based on the charge integrated in the plurality of charge storage units CS. The distance calculation unit 42 calculates a distance from the range imaging device 1 to the object S according to the calculated delay time Td.

The measurement control unit 43 selects mode between an light pulse emission condition selection mode for selecting an integration time according to the distance to the object (i.e., emission time of the light pulses PO) or an emission cycle of the light pulses PO (pulse period for emitting light pulses), and a ranging charge acquisition mode, as a normal frame, for measuring a distance from the range imaging device 1 to the object S (measuring a measurement distance), in each frame repeated in a frame cycle.

The measurement control unit 43 controls timing for the timing control unit 41 and controls calculation for the distance calculation unit 42, according to the light pulse emission condition selection mode and the ranging charge acquisition mode (described later).

Specifically, the range imaging device according to the present embodiment calculates the distance between an object and the range image sensor 32 based on the charge integrated in the charge storage units CS. Therefore, if the intensity of incident light is high and the charge generated in the photoelectric conversion element exceeds the capacity of the charge storage units CS during measurement distance calculation, it will be difficult to correctly calculate a distance between the range imaging device 1 and the object S through measurement distance calculation.

Furthermore, as the distance from the range imaging device 1 to the object S increases, or as the reflectance of the object S decreases, the intensity of the reflected light arising from reflection of the light pulses PO from the object S decreases. Accordingly, the charge generated due to the reflected light in the photoelectric conversion element also decreases, and thus, being affected by noise, the accuracy of calculating a measurement distance decreases. For this reason, the integration time is required to be increased.

Based on the charge integrated in the charge storage units resulting from the above processing, auto exposure processing is performed to control the integration time or the emission time of the light pulses PO.

Herein, if the intensity of reflected light decreases, the integration time is increased to increase the number of times that charge generated in the photoelectric conversion element by reflected light is integrated, and thus, charge required for calculating a measurement distance is integrated in the charge storage units, by which the accuracy in distance as obtained will be improved.

However, if the integration time is simply increased in order to measure a distance, the emission time of the light pulses PO may also be increased. In this case, it is unavoidable that laser light is continued to be actively and deliberately emitted to the objects including humans.

Therefore, in the present embodiment, considering the case where the objects include humans, measurement control is performed under which the effects of laser light on humans are reduced to satisfy eye-safety standards (e.g., suppress exposure, to be a level not exceeding the maximum permissible exposure) (detailed processing will be described later).

With this configuration, in the range imaging device 1, the light source unit 2 emits the light pulses PO in the near infrared wavelength band to the object S, the light-receiving unit 3 receives the reflected light RL reflected from the object S, and the range image processing unit 4 outputs distance information indicating a distance between the object S and the range imaging device 1.

Although Fig. 1 shows a range imaging device 1 configured to include the range image processing unit 4 inside thereof, the range image processing unit 4 may be a component provided external to the range imaging device 1.

Herein, the configuration of each pixel circuit 321 in the range image sensor 32 will be described. Fig. 2 is a circuit diagram illustrating an example of a configuration of a pixel circuit 321 disposed in the range image sensor 32 in the range imaging device according to the first embodiment of the present invention. The pixel circuit 321 shown in Fig. 2 is a configuration example including, for example, four pixel signal readouts RU1 to RU4. The configuration of the pixel circuit 321 of the present embodiment is only an example and includes three or more, i.e., N (N≥3), pixel signal readouts.

The pixel circuit 321 includes one photoelectric conversion element PD, a charge discharge transistor GD, and four pixel signal readouts RU (RU1 to RU4) which output voltage signals from respective output terminals O. Each of the pixel signal readouts RU includes a transfer transistor G, floating diffusion FD, charge storage capacity C, reset transistor RT, source follower transistor SF, and selection transistor SL. The floating diffusions FD (FD1, FD2, FD3, FD4) and the charge storage capacities C (C1, C2, C3, C4) configure the charge storage units CS (CS1, CS2, CS3, CS4).

In the pixel circuit 321 shown in Fig. 2, the pixel signal readout RU1 which outputs a voltage signal from an output terminal O1 includes a transfer transistor G1 (transfer MOS transistor), floating diffusion FD1, charge storage capacity C1, reset transistor RT1, source follower transistor SF1, and selection transistor SL1. In the pixel signal readout RU1, the floating diffusion FD1 and the charge storage capacity C1 configure a charge storage unit CS 1. The pixel signal readouts RU2, RU3 and RU4 are configured similarly.

The photoelectric conversion element PD is an embedded photodiode which performs photoelectric conversion for incident light, generates charge corresponding to the incident light, and integrates the generated charge. In the present embodiment, incident light is incident from a space as a measurement target.

In the pixel circuit 321, charge generated by photoelectric conversion of incident light by the photoelectric conversion element PD is distributed to the four charge storage units CS (CS 1 to CS4), and voltage signals corresponding to the distributed charge are outputted to the range image processing unit 4.

The configuration of each pixel circuit disposed in the range image sensor 32 is not limited to the configuration, as shown in Fig. 2, provided with the four pixel signal readouts RU (RU1 to RU4), but the pixel circuit may be configured to include one or more pixel signal readouts RU.

In response to each pixel circuit 321 of the range imaging device 1 being driven, the light pulses PO are emitted for an emission time To and reflected light RL is received by the range image sensor 32 after a delay time Td. Under the control of the timing control unit 41, the pixel drive circuit 322 causes integration drive signals TX1 to TX4 to supply charge generated in the photoelectric conversion element PD to the transfer transistors G1, G2, G3, G4 according to their respective timings in synchronization with emission of the light pulses PO, for sequential integration in the charge storage units CS1, CS2, CS3, CS4.

The pixel drive circuit 322 controls the reset transistors RT and the selection transistors SL using drive signals RST and SEL. The pixel drive circuit 322 causes the source follower transistors SF to convert the charge integrated in the charge storage units CS into electrical signals, and outputs the generated electrical signals to the distance calculation unit 42 via the output terminals O.

Under the control of the timing control unit 41, the pixel drive circuit 322 discharges the charge generated in the photoelectric conversion element PD to a power source VDD (erases the charge) using a drive signal RSTD.

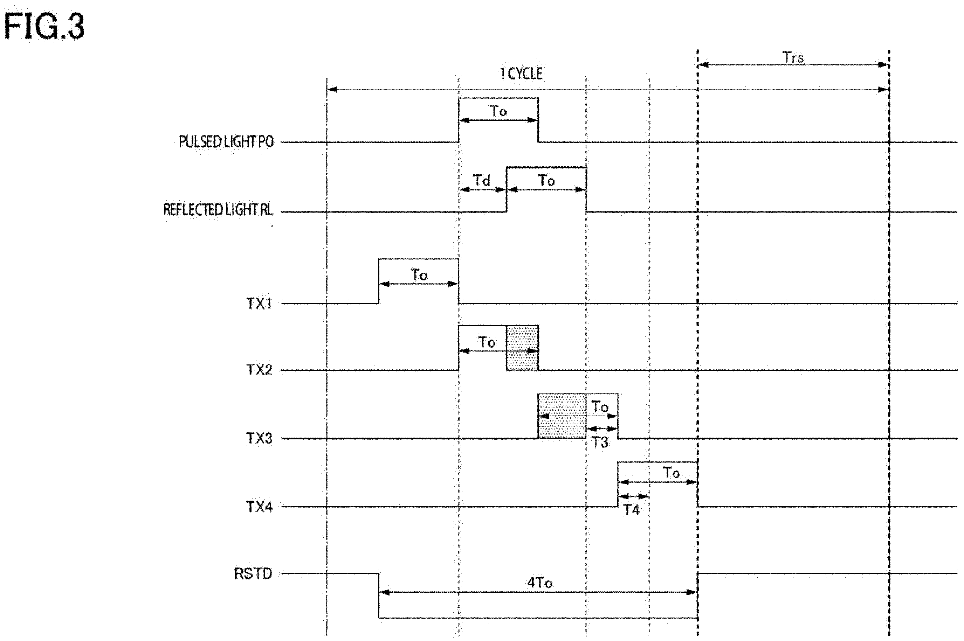

Fig. 3 is a timing chart illustrating transfer of charge generated in the photoelectric conversion element PD to the individual charge storage units CS.

In the timing chart of Fig. 3, the vertical axis indicates pulse level and the horizontal axis indicates time. The timing chart also shows an integration cycle which is repeated during the charge integration period in a frame. The timing chart shows a correlation between the light pulses PO and the reflected light RL on the time axis, timing of integration drive signals TX1 to TX4 supplied to the respective transfer transistors G1 to G4, and timing of the drive signal RSTD supplied to the charge discharge transistor GD.

The timing control unit 41 causes the light source unit 2 to emit the light pulses PO to the measurement space. Thus, the light pulses PO are reflected by the object and received by the light-receiving unit 3 as reflected light RL. Also, the photoelectric conversion element PD generates charge corresponding to ambient light and the reflected light RL. The pixel drive circuit 322, which transfers charge generated in the photoelectric conversion element PD to the charge storage units CS1 to CS4, performs switching control (on-off processing) for the transfer transistors G1 to G4.

In other words, the pixel drive circuit 322 supplies the integration drive signals TX1 to TX4 to the transfer transistors G1 to G4 as H-level signals with a predetermined duration (emission time To, i.e., the same duration as the pulse width of the light pulses).

The pixel drive circuit 322, for example, turns on the transfer transistor G1 provided on the transfer path through which charge is transferred to the charge storage unit CS1 from the photoelectric conversion element PD. Thus, the charge photoelectrically converted by the photoelectric conversion element PD is integrated in the charge storage unit CS 1 via the transfer transistor G1. After that, the pixel drive circuit 322 turns off the transfer transistor G1. Thus, charge transfer to the charge storage unit CS 1 is stopped. In this way, the pixel drive circuit 322 causes the charge storage unit CS 1 to integrate charge. The same applies to other charge storage units CS2, CS3 and CS4.

In this case, in a charge integration period in which charge is distributed to the charge storage units CS (period in which charge is integrated in the charge storage units CS in a frame), the integration cycle (the cycle in which charge is stored and integrated) is repeated so that the integration drive signals TX1, TX2, TX3, TX4 are supplied to the transfer transistors G1, G2, G3, G4.

Thus, charge corresponding to the incident light is transferred to the charge storage units CS 1, CS2, CS3, CS4 from the photoelectric conversion element PD via the transfer transistors G1, G2, G3, G4. The integration cycle is repeated multiple times in the charge integration period.

Thus, charge is integrated in the charge storage units CS1, CS2, CS3, CS4 every integration cycle of each of the charge storage units CS1, CS2, CS3, CS4 in the charge integration period.

When repeating the integration cycle of each of the charge storage units CS1, CS2, CS3, CS4, after completing charge transfer (distribution) to the charge storage unit CS4, the pixel drive circuit 322 turns on the charge discharge transistor GD provided on the discharge path through which charge is discharged from the photoelectric conversion element PD, by supplying an H-level drive signal RSTD thereto.

Thus, the charge discharge transistor GD discards the charge generated in the photoelectric conversion element PD before restarting the integration cycle of the charge storage unit CS 1 and after completing the previous integration cycle of the charge storage unit CS4 (i.e., the photoelectric conversion element PD is reset).

The pixel drive circuit 322 sequentially performs signal processing such as A/D conversion processing for the voltage signals from all the pixel circuits 321 disposed in the light-receiving unit 3 for each row (horizontal array) of the pixel circuits 321.

After that, the pixel drive circuit 322 sequentially outputs the voltage signals subjected to signal processing to the distance calculation unit 42, in the order of columns of the pixel circuits disposed in the light-receiving unit 3.

As described above, the pixel drive circuit 322 repeatedly integrates charge in the charge storage units CS and discards charge photoelectrically converted by the photoelectric conversion element PD over one frame. Thus, charge corresponding to the amount of light received by the range imaging device 1 in a predetermined time interval is integrated in the individual charge storage units CS. The pixel drive circuit 322 outputs electrical signals corresponding to single-frame charges integrated in each of the charge storage units CS to the distance calculation unit 42.

Due to the relationship between the timing of emitting the light pulses PO and the timing of integrating charge in each of the charge storage units CS (CS1 to CS4) (integration timing), charge corresponding to external light components, such as a ambient light component before emission of the light pulses PO, is held in the charge storage unit CS 1. Also, charge corresponding to the reflected light RL and the external light component is distributed and held in the charge storage units CS2, CS3 and CS4. Distribution of charge to the charge storage units CS2 and CS3 or the charge storage units CS3 and CS4 (distribution ratio) can be expressed by a ratio according to the delay time Td from when the light pulses PO are reflected by the object S until when the reflected light is incident on the range imaging device 1.

Referring back to Fig. 1, the distance calculation unit 42 calculates a delay time Td using this principle through the following Formula (1) or Formula (2).

$$Td=To\times(Q3-Q1)/(Q2+Q3-2\times Q1) \qquad ... (1)$$

$$Td=To+To\times(Q4-Q1)/(Q3+Q4-2\times Q1) \qquad ... (2)$$

where To represents the period of emitting the light pulses PO, Q1 represents charge integrated in the charge storage unit CS1, Q2 represents charge integrated in the charge storage unit CS2, Q3 represents charge integrated in the charge storage unit CS3, and Q4 represents charge integrated in the charge storage unit CS4. For example, if Q4=Q1, the distance calculation unit 42 calculates a delay time Td using Formula (1) and, if Q2=Q1, calculates a delay time Td using Formula (2).

In Formula (1), charge generated due to reflected light is integrated in the charge storage units CS2 and CS3, but is not integrated in the charge storage unit CS4. In Formula (2), charge generated due to reflected light is integrated in the charge storage units CS3 and CS4, but is not integrated in the charge storage unit CS2.

In Formula (1) or (2), of the charges integrated in the charge storage units CS2, CS3 and CS4, the component corresponding to the external light component is assumed to be the same in amount as the charge integrated in the charge storage unit CS 1.

The distance calculation unit 42 multiplies the delay time calculated through Formula (1) or (2) by the speed of light (velocity) to calculate a round-trip distance to the object S.

Then, the distance calculation unit 42 calculates 1/2 of the round-trip distance calculated above (delay time Td $\times$ c (light speed) /2) to calculate a distance to the object S from the range image sensor 32 (i.e., the range imaging device 1).

Time Trs represents the period of the drive signal RSTD supplied to the charge discharge transistor GD being at the H level so as not to allow charge generated due to incident light to remain (stay) in the photoelectric conversion element PD after completing distribution of charge to the charge storage unit CS4 from the photoelectric conversion element PD in one integration cycle shown in Fig. 3.

The time Trs is adjusted, while fixing the pulse width of the light pulses PO and the integration time (on-time of the transfer transistors G) for the charge storage units CS, to perform control under which the emission cycle of the light pulses PO can be changed as desired.

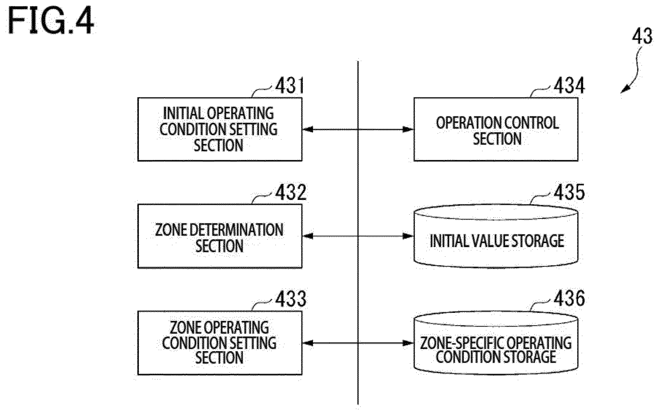

Fig. 4 is a block diagram illustrating a configuration example of the measurement control unit 43 in the range imaging device according to the first embodiment. In Fig. 4, the measurement control unit 43 includes an initial operating condition setting section 431, zone determination section 432, zone operating condition setting section 433, operation control section 434, initial value storage 435, and zone-specific operating condition storage 436.

The initial operating condition setting section 431 reads a preset initial operating light pulse emission condition from the initial value storage 435 if the mode is the light pulse emission condition selection mode for selecting an integration time according to the distance to the object.

The initial operating light pulse emission condition is a combination of a reference integration time (emission time of light pulses) which is an integration time set for the case where the distance to the object S from the range imaging device 1 and the reflectance of the object S are unknown, with an integration cycle. The integration cycle herein corresponds to 1 cycle shown in Fig. 3, i.e., corresponds to an emission cycle that is an interval of emitting the light pulses PO, and is adjusted by the time Trs according to the integration time (emission time) so that eye-safety standards are satisfied. Specifically, the time Trs is adjusted so that exposure constantly satisfying eye-safety standards can be achieved as the integration time is increased, thereby increasing the emission cycle.

The reference integration time of the initial operating light pulse emission condition is calculated, as an integration time corresponding to about one half of the maximum storage capacity of the charge storage units CS, by integrating charge in the charge storage units CS generated in the photoelectric conversion element PD by the reflected light RL arising from reflection of the light pulses PO from an object when, for example, an object with a reflectance of 50% is located at a smallest measurement distance (e.g., 0.5 m) from the range imaging device 1.

The light pulse period of the initial operating light pulse emission condition is adjusted by changing the time Trs. Herein, from time Ts when the light pulses PO are emitted until the end of the integration cycle, the emission cycle is calculated as 2To (width of light pulse) + Trs, with the pulse period being 3To + Trs.

As described above, the integration time is determined by the zone operating condition setting section 433 according to the measurement zone determined by the zone determination section 432.

However, the light pulse period is calculated as a period that does not exceed the maximum permissible exposure calculated from the set integration time as well as the intensity and width of the light pulses used. In the present embodiment, the intensity and width of the light pulses used, and the integration time for the charge storage units CS (on-time of the transfer transistors G) are fixed to constant values.

The operation control section 434 controls the light source unit 2 and the light-receiving unit 3 in the initial operating light pulse emission condition as the light pulse emission condition selection mode, so that charge generated due to the light pulses PO in the photoelectric conversion element PD can be distributed to the charge storage units CS1, CS2, CS3, CS4 for integration therein.

Thus, the distance calculation unit 42 calculates a distance from the range image sensor 32 (i.e., the range imaging device 1) to the object S (hereinafter may also be referred to as reference measurement distance) in the initial operating light pulse emission condition (i.e., in the light pulse emission condition selection mode), based on the integrated charge in the charge storage units CS 1, CS2, CS3, CS4.

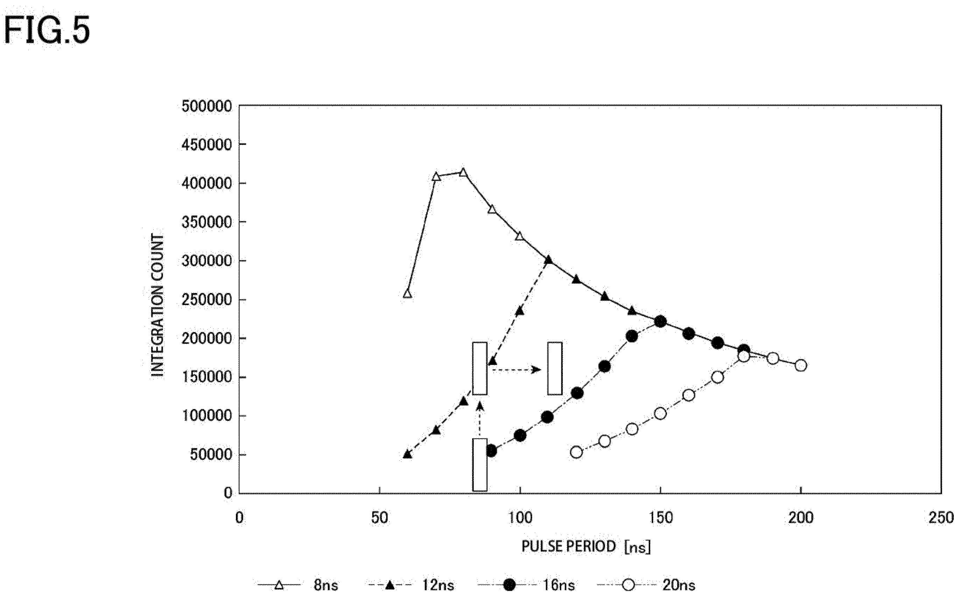

Fig. 5 is a diagram illustrating a relationship between a maximum permissible exposure and eye-safe level integration time and light pulse period. In Fig. 5, the vertical axis indicates integration time and the horizontal axis indicates pulse period. As pulse widths, the solid line indicates 8 ns, the dashed line indicates 12 ns, the dash-dot line indicates 16 ns, and the dash-dot-dot line indicates 20 ns.

Fig. 5 shows limit lines of maximum permissible exposure determined by the integration time and the pulse period, calculated for the individual pulse widths of the light pulses PO having a predetermined intensity.

For example, it is shown that, when the 8 ns-width light pulses indicated by the solid line are used, a combination of the integration time above the solid line with the pulse width may allow exposure exceeding the maximum permissible exposure. The same applies to other pulse widths of 12 ns indicated by the dashed line, 16 ns indicated by the dash-dot line, and 20 ns indicated by the dash-dot-dot line.

For example, when the light pulses PO have a pulse width of 12 ns indicated by the dashed line and when the integration time is increased from 50,000 to 160,000 at a pulse period of 90 ns, the coordinate points determined by the integration time and the pulse period may be above the dashed line.

In other words, when the pulse period is 90 ns and the integration time is 160,000, exposure may exceed the eye-safety criteria for the pulse width of 12 ns.

Therefore, if the integration time is 160,000, the pulse period may be extended to 110 ns to bring the coordinate points determined by the integration time and the pulse period to a position below the dashed line.

Thus, the coordinate points can be positioned below the dashed line so that, if the integration time is set to 160,000 and the light pulses PO with the pulse width of 12 ns are repeatedly emitted 160,000 times, exposure can be lower than the eye-safety criteria for the pulse width of 12 ns (can satisfy the standards).

In the present embodiment, an light pulse period (i.e., time Trs) satisfying eye-safety standards is set for each integration time, being correlated with the intensity and width of the light pulses PO used, based on the relationship between the pulse width, integration time, and pulse period shown in Fig. 5.

If the emission cycle for emitting the light pulses PO is short, charges corresponding to the set integration time are integrated in the charge storage units CS, followed by reading the charges integrated in each of the charge storage units CS.

Then, after reading the charge, the various processing described above, such as distance calculation to the object or correction, are executed according to the charges read from the charge storage units CS.

In this case, since the duration of one frame is limited, as the time that can be used for distance calculation or correction is increased, the arithmetic load is decreased accordingly to stabilize the system operation.

Therefore, in normal setting, the shorter emission cycle of emitting the light pulses PO is more suitable, from the perspective of increasing the time that can be used for distance calculation or correction.

However, if the emission cycle of emitting the light pulses PO is excessively short, the delay time for the light reflected by the distant object to return becomes relatively longer, and this reflected light may be incident in the subsequent emission cycle for integration.

Accordingly, while the length of the emission time Trs in one integration is determined to be at some level or more, stability of the system operation will be improved more with a shorter emission cycle as described above, and therefore, the emission cycle is required to be determined from the perspective of the integration time and eye-safety standards, in a comprehensive manner.

Referring back to Fig. 4, the zone determination section 432 detects a smallest distance as a reference measurement distance in the pixel circuit 321 region at a preset position, calculated by the distance calculation unit 42 with the initial operating light pulse emission condition.

Then, the zone determination section 432 compares the detected reference measurement distance with a preset distance threshold (zone threshold, e.g., distance threshold LB1 or LB2 described later), and determines a measurement zone in which the reference measurement distance is included.

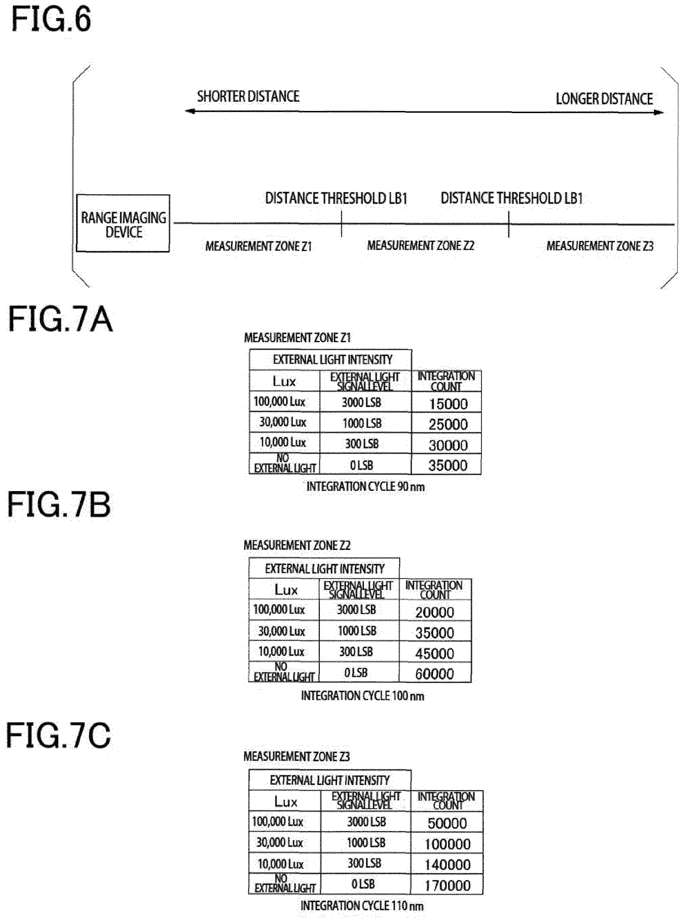

Fig. 6 is a conceptual diagram illustrating measurement zone determination performed by a zone determination section 432 according to the first embodiment.

A measurement zone Z1, a measurement zone Z2, and a measurement zone Z3 are provided in order of increasing distance from the range imaging device 1. The measurement zones Z1, Z2 and Z3 are defined by distance thresholds LB 1 and LB2.

The distance thresholds LB 1 and LB2, which are in a relationship LB1<LB2 (LB2 is larger than LB1), are calculated through experiments and the like to see whether charge required for a measurement distance can be acquired, and set as predetermined distances in advance, so that an integration time and a pulse period satisfying eye-safety standards can be determined.

If the reference measurement distance is smaller than the distance threshold LB 1, the zone determination section 432 determines that the object is in the distance range of the measurement zone Z1.

If the reference measurement distance is equal to or greater than the distance threshold LB 1 and smaller than the distance threshold LB2, the zone determination section 432 determines that the object is in the distance range of the measurement zone Z2.

If the reference measurement distance is equal to or greater than the distance threshold LB2, the zone determination section 432 determines that the object is in the distance range of the measurement zone Z3.

The present embodiment is described assuming that there are three measurement zones; however, any number of measurement zones, as long as it is two or more, may be formed.

Referring back to Fig. 4, the zone operating condition setting section 433 selects any one of multiple integration times set in the measurement zone determined by the zone determination section 432. In the present embodiment, the light pulse period is set to a time fixed for each of the measurement zones. Specifically, as long as the measurement zone remains unchanged, the light pulse period is set as time satisfying eye-safety standards (see Fig. 5) when the integration time is the greatest, and remains unchanged with any integration time.

Furthermore, multiple integration times are set for each measurement zone according to the intensity of ambient light (external light intensity).

Figs. 7A to 7B are diagrams illustrating examples of integration time tables set for respective measurement zones in the zone-specific operating condition storage 436. Figs. 7A to 7C show integration time tables corresponding to, for example, the measurement zones Z1, Z2 and Z3.

Fig. 7A shows an integration time table TBL1 for the measurement zone Z1, Fig. 7B shows an integration time table TBL2 for the measurement zone Z2, and Fig. 7C shows an integration time table TBL3 for the measurement zone Z3.

The integration cycle is different between the measurement zones, i.e., 90 ns for the measurement zone Z1, 100 ns for the measurement zone Z2, and 110 ns for the measurement zone Z3. Specifically, the greater the distance to the measurement zone (in other words, as the greatest integration time in the integration time table is increased), the time Trs becomes longer by 10 ns. In all of the measurement zones Z1, Z2 and Z3, the width and intensity of the light pulses PO, and the integration time for the charge storage units CS (on-time of the transfer transistors G) are the same and constant.

For example, if ambient light intensity is 100,000 Lux in the measurement zone Z1 (integration cycle: 90 ns), i.e., if the maximum storage capacity of the charge storage units CS is 4,080 LSB (least significant bit), charge integrated due to ambient light may be 3,000 LSB and the integration time may be 15,000.

Similarly, in the case of 30,000 Lux, charge integrated due to ambient light may be 1,000 LSB and the integration time may be 25,000. Similarly, in the case of 10,000 Lux, charge integrated due to ambient light may be 300 LSB and the integration time may be 30,000. Without ambient light, charge integrated due to ambient light may be 0 LSB and the integration time may be 35,000.

Referring back to Fig. 4, the zone operating condition setting section 433 acquires the charge integrated in the charge storage unit CS1, i.e., ambient light charge (external light signal level), from the distance calculation unit 42.

Also, the zone operating condition setting section 433 refers to an integration time table in the zone-specific operating condition storage 436, corresponding to the measurement zone determined by the zone operating condition setting section 433.

The zone operating condition setting section 433 reads the integration time corresponding to the acquired ambient light charge, from the integration time table referred to.

In this case, the zone operating condition setting section 433 also reads the integration cycle correlated to the integration time table.

Thus, the zone operating condition setting section 433 acquires (obtains) an integration time and an integration cycle as operating light pulse emission condition corresponding to the measurement zone.

The operation control section 434 controls the light source unit 2 and the light-receiving unit 3 in the operating light pulse emission condition calculated by the zone operating condition setting section 433 as the ranging charge acquisition mode, so that charge generated due to the light pulses PO can be distributed to the charge storage units CS1, CS2, CS3, CS4 for integration therein.

Thus, the distance calculation unit 42 calculates a distance from the range image sensor 32 (i.e., the range imaging device 1) to the object S (hereinafter may also be referred to as measurement distance) in the operating light pulse emission condition (i.e., in the ranging charge acquisition mode), based on the integrated charge in the charge storage units CS1, CS2, CS3, CS4.

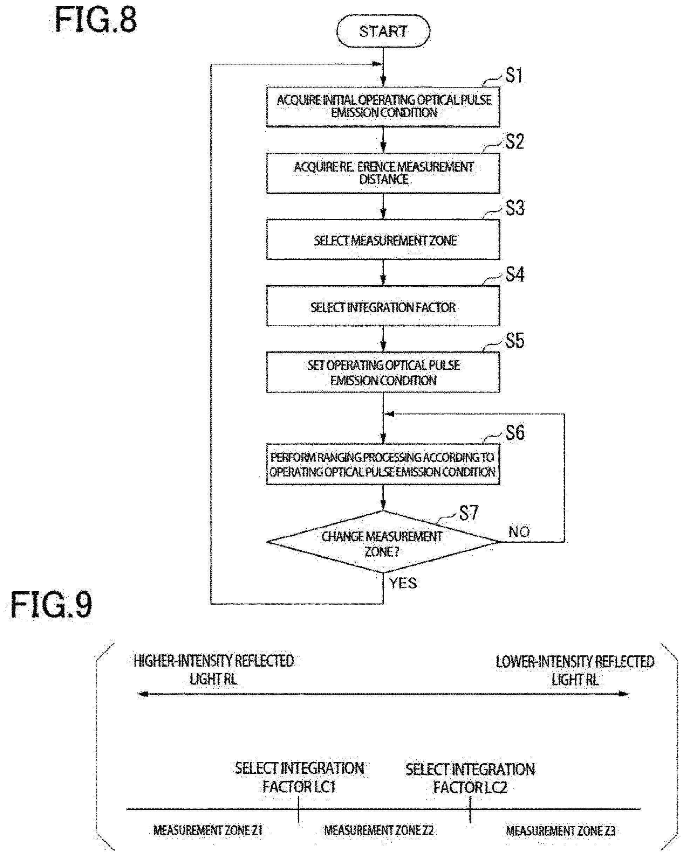

Fig. 8 is a flowchart illustrating an example of the processing for calculating a distance between the range image sensor 32 and the object S performed by the range imaging device 1 according to the first embodiment. When the range imaging device 1 is activated, the following processing is started from step S1.

Step S1:

The initial operating condition setting section 431 reads an initial operating light pulse emission condition from the initial value storage 435.

Then, the initial operating condition setting section 431 outputs the read initial operating light pulse emission condition to the operation control section 434.

Step S2:

If the initial operating light pulse emission condition is supplied, the operation control section 434 controls the light source unit 2 and the light-receiving unit 3 in the light pulse emission condition selection mode.

The light source unit 2 emits the light pulses PO according to the predetermined cycle, i.e., the integration cycle and the reference integration time (emission time) of the initial operating light pulse emission condition.

The pixel drive circuit 322 distributes the charge generated due to the reflected light RL in the photoelectric conversion element PD to each of the charge storage units CS1, CS2, CS3, CS4 in the individual pixel circuits 321 for integration therein, according to the integration cycle and reference integration time of the initial operating light pulse emission condition.

Then, the distance calculation unit 42 calculates a distance (reference measurement distance) according to the charge integrated in each of the charge storage units CS1, CS2, CS3, CS4.

Step S3:

The zone determination section 432 acquires a smallest distance in the preset pixel circuit 321 region calculated by the distance calculation unit 42, as a reference measurement distance.

Then, the zone determination section 432 compares the acquired reference measurement distance with the distance threshold LB 1 and the distance threshold LB2 exceeding the distance threshold LB 1.

If the reference measurement distance is smaller than the distance threshold LB 1, the zone determination section 432 determines that the object nearest the range imaging device 1 is in the distance range of the measurement zone Z1.

If the reference measurement distance is equal to or greater than the distance threshold LB 1 and smaller than the distance threshold LB2, the zone determination section 432 determines that the object nearest the range imaging device 1 is in the distance range of the measurement zone Z2.

Furthermore, if the reference measurement distance is equal to or greater than the distance threshold LB2, the zone determination section 432 determines that the object nearest the range imaging device 1 is in the distance range of the measurement zone Z3.

Then, the zone determination section 432 outputs the type of the determined measurement zone to the zone operating condition setting section 433.

Step S4:

If the type of the determined measurement zone is supplied from the zone determination section 432, the zone operating condition setting section 433 acquires an operating light pulse emission condition corresponding to the measurement zone.

In this case, the zone operating condition setting section 433 acquires the ambient light charge (corresponding voltage) calculated from the pixel circuits 321 used when calculating the reference measurement distance, from the distance calculation unit 42.

Then, the zone operating condition setting section 433 refers to an integration factor table in the zone-specific operating condition storage 436, corresponding to the measurement zone acquired from by the zone determination section 432.

The zone operating condition setting section 433 reads an integration factor corresponding to charge of the ambient light from the integration factor table referred to.

In this case, the zone operating condition setting section 433 also reads the integration cycle added to the integration factor table from which the integration factor has been read.

Step S5:

The zone operating condition setting section 433 outputs the acquired integration factor and integration cycle to the operation control section 434 as an operating light pulse emission condition.

If an operating light pulse emission condition is supplied, the operation control section 434 sets an operating state, such as an emission time (integration time) of the light pulses for the light source unit 2 and distribution of charge to the charge storage units CS from the photoelectric conversion element PD of the light-receiving unit 3, in the ranging charge acquisition mode.

Step S6:

Then, the light source unit 2 emits the light pulses PO according to the predetermined cycle, i.e., the integration cycle and emission time (integration time) of the operating light pulse emission condition.

The pixel drive circuit 322 distributes charge generated due to the reflected light RL in the photoelectric conversion element PD to the charge storage units CS1, CS2, CS3, CS4 of each of the pixel circuits 321 for integration therein, according to the integration cycle and integration time of the operating light pulse emission condition.

Then, the distance calculation unit 42 calculates a distance according to the charge integrated in each of the charge storage units CS1, CS2, CS3, CS4.

Step S7:

The zone determination section 432 detects pixel circuits 321 with a smallest distance and a greatest distance in the preset pixel circuit 321 region, calculated by the distance calculation unit 42.

Then, for each of the smallest distance and the greatest distance, the zone determination section 432 reads charge (voltage) of a charge storage unit CS with a greatest amount from among the charge storage units CS1, CS2, CS3, CS4.

In this case, if the voltage corresponding to the smallest distance is lower than a preset lower limit threshold or if the voltage corresponding to the greatest distance exceeds a preset upper limit threshold, the zone determination section 432 allows processing to proceed to step S1.

If the voltage corresponding to the smallest distance is lower than the preset lower limit threshold or if the voltage corresponding to the greatest distance exceeds the preset upper limit threshold, it means that the object nearest the range imaging device 1 is no longer present in the measurement zone corresponding to the current operating light pulse emission condition, and therefore, the light pulse emission condition selection mode is required to be performed again to change the measurement zone.

If the voltage corresponding to the smallest distance is higher than the preset lower limit threshold and if the voltage corresponding to the greatest distance is equal to or lower than the preset upper limit threshold, the zone determination section 432 allows processing to proceed to step S6.

If the voltage corresponding to the smallest distance is equal to or higher than the preset lower limit threshold and if the voltage corresponding to the greatest distance is equal to or lower than the preset upper limit threshold, it means that the object nearest the range imaging device 1 is present in the measurement zone corresponding to the current operating light pulse emission condition, and therefore, there is no need to change the measurement zone and thus measurement of the measurement distance is continued in the ranging charge acquisition mode.

The lower limit threshold refers to a threshold indicating that charge with which a measurement distance can be measured maintaining accuracy has not yet been obtained.

The upper limit threshold refers to a threshold which is set as charge exceeding a predetermined percentage (e.g., 95%) of the maximum storage capacity of the charge storage units and thus refers to a threshold indicating that the charge storage units may be saturated.

In the present embodiment, whether to change the measurement zone has been determined using the lower limit threshold and the upper limit threshold; however, the light pulse emission condition selection mode may be configured to be performed for each preset number of frames.

With this configuration, for example, if the number of processed frames exceeds a frame threshold, i.e., a preset number of frames, at step S7, processing may proceed to step S 1; however, if the number of processed frames is equal to or smaller than the frame threshold, processing may proceed to step S6.

As described above, according to the present embodiment, the reference measurement distance between the range imaging device 1 and the object, which is obtained using the reference integration time in the light pulse emission condition selection mode, is compared with the distance thresholds LB 1 and LB2, and the measurement zone where the object is present (the measurement zone where the object nearest the imaging device is present) is calculated from the comparison result. As an light pulse emission condition for an object, an integration time (i.e., emission time) with which a distance can be calculated with predetermined accuracy, and an emission cycle satisfying eye-safety standards with the integration time are obtained and, in the ranging charge acquisition mode, light pulses are emitted according to the light pulse emission condition, and charge generated in the photoelectric conversion element PD at each emission is distributed to the charge storage units and integrated therein. Thus, a satisfactory integration time can be obtained so that charge required for measuring the distance can be integrated in the charge storage units, and personal safety standards (eye-safety standards) can be satisfied even when the light pulses are continuously emitted.

According to the present embodiment, integration times corresponding to the respective ambient light intensities (external light intensities) are set in the integration time table of each measurement zone, and therefore, an integration time corresponding to the ambient light intensity measured in the light pulse emission condition selection mode can be selected, and this can easily suppress saturation of the charge storage units due to the ambient light intensity.

<Second Embodiment>

Hereinafter, a second embodiment of the present invention will be described.

The range imaging device according to the second embodiment of the present invention has a configuration similar to that of the first embodiment shown in Figs. 1 and 4.

Hereinafter, only operations different from those of the range imaging device of the first embodiment will be described.

In the present embodiment, the measurement control unit 43 calculates an integration time and an emission cycle according to the intensity of the reflected light from the object S, so that the charge storage units will not be saturated and personal safety standards can be satisfied even when the light pulses are continuously emitted.

In each frame repeated in the frame cycle, the measurement control unit 43 causes the light source unit 2 to emit the light pulses PO, causes the timing control unit 41 to distribute charge, which is generated due to incident light in the photoelectric conversion element in each pixel circuit (pixel circuit 321) described later, to the charge storage units for integration therein, and causes the distance calculation unit 42 to control calculation, according to the calculated integration time and emission cycle (details will be described later).

Being different from the first embodiment in which a measurement zone is selected according to the distance between the range imaging device 1 and the object, in the present embodiment, a measurement zone is selected according to the intensity of reflected light from the object, and therefore, a combination of the distance between the range imaging device 1 and the object with the reflectance of the object serves as a parameter used for selecting a measurement zone.

Since a reference charge is set for each predetermined distance and predetermined reflectance, a charge ratio also has a correlation with an attenuation rate according to the distance between the range imaging device 1 and the object and an attenuation rate according to the reflectance of the object.

In this case, the zone determination section 432 calculates charge (signal level) generated due to the reflected light RL, by removing ambient light charge from the charge in each of the charge storage units CS2, CS3, CS4 supplied from the pixel drive circuit 322.

The zone determination section 432 adds the integrated charge (voltage) of each of the charge storage units CS2, CS3, CS4 to calculate total charge generated due to the reflected light RL.

The zone determination section 432 reads the reference charge (reference value) from the initial value storage 435, divides the total charge by the reference charge, and outputs a charge ratio as the division result.

The reference charge (reference value) is set as follows.

Charge generated due to the reflected light RL from the object arising from the light pulses PO is acquired using the width of the light pulses PO per unit integration time, the on-time of the transfer transistor G when distributing the charge generated in the photoelectric conversion element PD to each of the charge storage units CS, and the reference integration time according to unit integration time. The reference charge is set such that the acquired charge is smaller than the storage capacity of the charge storage units CS (e.g., around half of the maximum storage capacity of the charge storage units CS). The reference charge is stored in advance in the initial value storage 435. The unit integration time refers to 1 cycle shown in Fig. 3.

As already described in the first embodiment, the reference integration time refers to the integration time set in the light pulse emission condition selection mode.

Fig. 9 is a conceptual diagram illustrating measurement zone determination performed by the zone determination section 432 according to the second embodiment.

The measurement zone of the present embodiment is a zone that is a region in the range of high-intensity (large value) to low-intensity (small value) reflected light RL, in which a measurement zone Z1, a measurement zone Z2, and a measurement zone Z3 are provided in order of decreasing intensity from high to low. The measurement zones Z1, Z2 and Z3 are defined by charge ratio thresholds (zone thresholds) LC1 and LC2.

The charge ratio thresholds LC1 and LC2 are in a relationship LC1>LC2 (charge ratio relationship in which LC1 is larger than LC2), calculated through experiments or the like to determine whether charge not saturating the charge storage units CS and required for calculating a measurement distance can be acquired, and are set in advance as charge ratios corresponding to predetermined integrated charges.

If the charge ratio is equal to or higher than the charge ratio threshold LC1, the zone determination section 432 determines that the object is in the measurement condition range of the measurement zone Z1.

If the charge ratio is lower than the charge ratio threshold LC 1 and equal to or higher than the charge ratio threshold LC2, the zone determination section 432 determines that the object is in the measurement condition range of the measurement zone Z2.

If the charge ratio is lower than the charge ratio threshold LC2, the zone determination section 432 determines that the object is in the measurement condition range of the measurement zone Z3.

The measurement condition range indicates a range of a measurement zone, i.e., indicates an intensity range of the reflected light RL which is determined by the distance from the range imaging device to the object, or the reflectance of the surface of the object, or both of the distance and the reflectance.

The present embodiment is described assuming that there are three measurement zones; however, any number of measurement zones, as long as it is two or more, may be formed.

In the above description, the charge ratios of all the pixel circuits 321 of the range image sensor 32 are calculated for use in selecting a measurement zone; however, a predetermined region (e.g., center region of the range image sensor 32) may be set in advance, and charge ratios of the pixel circuits 321 in this predetermined region may be calculated for use in selecting a measurement zone.

The zone-specific operating condition storage 436 stores in advance the integration time tables corresponding to the respective measurement zones.

These integration time tables are configured similarly to the integration time tables described in the first embodiment referring to Figs. 7A to 7C.

As in the first embodiment, in all of the measurement zones Z1, Z2 and Z3, the width and intensity of the light pulses PO, and the integration time for the charge storage units CS (on-time of the transfer transistors G) are the same and constant.

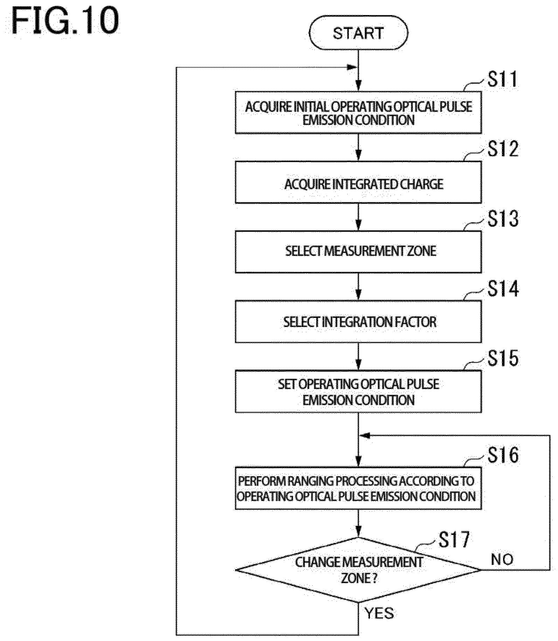

Fig. 10 is a flowchart illustrating an example of the processing for calculating a distance between the range image sensor 32 and the object S performed by the range imaging device 1 according to the second embodiment. When the range imaging device 1 is activated, the following processing is started from step S11.

Step S11:

The initial operating condition setting section 431 reads an initial operating light pulse emission condition from the initial value storage 435.

Then, the initial operating condition setting section 431 outputs the read initial operating light pulse emission condition to the operation control section 434.

Step S 12:

If the initial operating light pulse emission condition is supplied, the operation control section 434 controls the light source unit 2 and the light-receiving unit 3 in the light pulse emission condition selection mode.

Specifically, the light source unit 2 emits the light pulses PO according to the predetermined cycle, i.e., the integration cycle (i.e., emission cycle) and the reference integration time of the initial operating light pulse emission condition.

The pixel drive circuit 322 distributes the charge generated due to the reflected light RL in the photoelectric conversion element PD to each of the charge storage units CS1, CS2, CS3, CS4 in the individual pixel circuits 321 for integration therein, according to the integration cycle and reference integration time of the initial operating light pulse emission condition.

Then, the distance calculation unit 42 calculates and acquires a distance from the range imaging device 1 to the object according to the charge integrated in each of the charge storage units CS1, CS2, CS3, CS4.

The zone determination section 432 acquires the charges Q1, Q2, Q3, Q4 stored in the charge storage units CS1, CS2, CS3, CS4 from the distance calculation unit 42.

The zone determination section 432 subtracts the charge Q1 of the charge storage unit CS1, i.e., the charge generated due to ambient light, from each of the charges Q2, Q3, Q4.

Then, the zone determination section 432 adds the charges Q2, Q3, Q4 after subtraction of the charge Q1 due to ambient light, i.e., adds the charges generated due to the reflected light RL, and calculates total charge as the addition result (acquisition of total charge).

Step S13:

The zone determination section 432 acquires greatest total charge in the preset pixel circuit 321 region as reference total charge.

The zone determination section 432 reads the reference charge from the initial value storage 435, subtracts the reference total charge by the reference charge, and calculates a charge ratio.

Then, the zone determination section 432 compares the calculated charge ratio with each of the charge ratio threshold LC1 and the charge ratio threshold LC2 lower than the charge ratio threshold LC1.

In this case, if the charge ratio is equal to or higher than the charge ratio threshold LC1, the zone determination section 432 determines that the object reflecting the reflected light RL with highest intensity is within the measurement condition range of the measurement zone Z1.

If the charge ratio is lower than the charge ratio threshold LC 1 and equal to or higher than the charge ratio threshold LC2, the zone determination section 432 determines that the object reflecting the reflected light RL with highest intensity is within the measurement condition range of the measurement zone Z2.

If the charge ratio is lower than the charge ratio threshold LC2, the zone determination section 432 determines that the object reflecting the reflected light RL with highest intensity is within the measurement condition range of the measurement zone Z3.

Then, the zone determination section 432 outputs the type of the determined measurement zone to the zone operating condition setting section 433.

Step S 14:

If the type of the determined measurement zone is supplied from the zone determination section 432, the zone operating condition setting section 433 acquires an operating light pulse emission condition corresponding to the measurement zone.

In this case, the zone operating condition setting section 433 acquires the ambient light charge (corresponding voltage) calculated from the pixel circuits 321 used when calculating the charge ratio, from the zone determination section 432.

Then, the zone operating condition setting section 433 refers to an integration factor table in the zone-specific operating condition storage 436, corresponding to the measurement zone acquired from by the zone determination section 432.

The zone operating condition setting section 433 reads an integration factor corresponding to charge of the ambient light from the integration factor table referred to.

In this case, the zone operating condition setting section 433 also reads the integration cycle added to the integration factor table from which the integration factor has been read.

Step S 15:

The zone operating condition setting section 433 outputs the acquired integration factor and integration cycle to the operation control section 434 as an operating light pulse emission condition.

If the operating light pulse emission condition is supplied, the operation control section 434 sets an operating state of the circuit in each of the light source unit 2 and the light-receiving unit 3, in the ranging charge acquisition mode.

Step S 16:

Then, the light source unit 2 emits the light pulses PO according to the predetermined cycle, i.e., the integration cycle and emission time (integration time) of the operating light pulse emission condition.

The pixel drive circuit 322 distributes charge generated due to the reflected light RL in the photoelectric conversion element PD to the charge storage units CS1, CS2, CS3, CS4 of each of the pixel circuits 321 for integration therein, according to the integration cycle and integration time of the operating light pulse emission condition.

Then, the distance calculation unit 42 calculates a distance according to the charge integrated in each of the charge storage units CS1, CS2, CS3, CS4.

Step S17:

The zone determination section 432 selects a pixel circuit 321 with smallest total charge and a pixel circuit 321 with greatest total charge from the pixel circuits 321 of the range image sensor 32.

Then, the zone determination section 432 compares the smallest total charge with a preset lower limit threshold, and compares the greatest total charge with a preset upper limit threshold.

In this case, if the smallest total charge is smaller than the preset lower limit threshold or if the greatest total charge exceeds the preset upper limit threshold, the zone determination section 432 allows processing to proceed to step S11.

If the smallest total charge is smaller than the preset lower limit threshold or if the greatest total charge exceeds the preset upper limit threshold, it means that the object used for measurement zone selection is no longer present in the measurement zone corresponding to the current operating light pulse emission condition, and therefore, the light pulse emission condition selection mode is required to be performed again to change the measurement zone.

If the voltage corresponding to the smallest distance is equal to or higher than a preset lower limit threshold and if the voltage corresponding to the greatest distance is equal to or lower than a preset upper limit threshold, the zone determination section 432 allows processing to proceed to step S16.

If the smallest total charge is equal to or greater than the preset lower limit threshold and if the greatest total charge is equal to or smaller than the preset upper limit threshold, it means that the object used for measurement zone selection is present in the measurement zone corresponding to the current operating light pulse emission condition, and therefore, there is no need to change the measurement zone and thus measurement of the measurement distance is continued in the ranging charge acquisition mode.

In the present embodiment described above, it is determined that, if the object used for measurement zone selection is no longer present in the measurement zone corresponding to the current operating light pulse emission condition, the light pulse emission condition selection mode is performed again, and if the object is present in the measurement zone, the ranging charge acquisition mode is continued.

However, if there are only a small number of set measurement zones, such as two or three, and if the smallest total charge is smaller than the present lower limit threshold or if the greatest total charge exceeds the present upper limit threshold, processing may be switched to determining the corresponding measurement zone, without proceeding to the light pulse emission condition selection mode.

As described above, according to the present embodiment, the integrated charge obtained with the reference integration time in the light pulse emission condition selection mode is divided by the reference charge, i.e., reference value, and the measurement zone where the object is present is calculated from the charge ratio obtained as the division result. Using this method, a measurement zone where the object reflecting the reflected light RL with a highest intensity is determined. Ranging may also be performed according to the light pulse emission condition which is set so as not to saturate the charge storage units CS in the determined measurement zone. Thus, the charge storage units CS can be prevented from being saturated with integrated charge even when the distance between the range imaging device and the object is unknown or even when the reflection intensity of the object is unknown.

According to the present embodiment, the integrated charge obtained with the reference integration time in the light pulse emission condition selection mode is divided by the reference charge, i.e., reference value, and the measurement zone where the object is present is calculated from the charge ratio obtained as the division result. Using this method, a measurement zone where the object reflecting the reflected light RL with a highest intensity is determined. As an light pulse emission condition in the determined measurement zone, an integration time (i.e., emission time) with which a distance can be calculated with predetermined accuracy, and an emission cycle satisfying eye-safety standards with the integration time is selected. In the ranging charge acquisition mode, the light pulses are emitted according to the light pulse condition, and the charge generated in the photoelectric conversion element PD at each emission is distributed to the charge storage units for integration therein. Thus, a satisfactory integration time can be obtained so that charge required for measuring the distance can be integrated in the charge storage units, and personal safety standards (eye-safety standards) can be satisfied even when the light pulses are continuously emitted.

According to the present embodiment, integration times for respective ambient light intensities (external light intensities) are set in the integration time table of each measurement zone. Thus, an integration time can be suitably selected for the ambient light measured in the light pulse emission condition selection mode, and thus the charge storage units can be easily prevented from being saturated due to ambient light.

Range imaging devices using TOF techniques have been described so far as configurations of the first and second embodiments; however, the present invention is not limited to be applied to this, but can be applied to sensors such as RGB-IR (red green blue - infrared radiation) sensors with a structure in which a photodiode is applied as a charge storage unit.

As long as charge generated due to incident light in the photodiode is configured to be integrated in the charge storage units, the present invention can also be applied to CCD (charge coupled device) image sensors, CMOS (complementary metal oxide semiconductor) image sensors, or the like.

In each of the first and second embodiments, a configuration including four pixel signal readouts RU1 to RU4 has been described; however, the configuration should not be limited to this. For example, the configuration may include three pixel signal readouts RU, or include five or more pixel signal readouts RU, i.e., in the configuration including three or more pixel signal readouts RU, processing similar to the present embodiment may be performed by determining a measurement zone where the object reflecting the reflected light RL with a highest intensity for the range imaging device is present, dividing the integrated charge obtained with the reference integration time in the light pulse emission condition selection mode by the reference charge, i.e., reference value, calculating a measurement zone where the object is present using the charge ratio obtained as the division result, and performing ranging according to the light pulse emission condition that is set so that the charge storage units CS in the measurement zone will not be saturated. Thus, the charge storage units CS can be prevented from being saturated with charge even when the distance between the range imaging device and the object is unknown or the reflection intensity of the object is unknown.

Also, for the configuration including three or more pixel signal readouts RU, processing similar to the present embodiment may be performed by dividing the integrated charge obtained with the reference integration time in the light pulse emission condition selection mode by the reference charge, i.e., reference value, to calculate the measurement zone where the object is present using the charge ratio obtained as the division result, determining the measurement zone where the object reflecting the reflected light RL with a highest intensity is present using this method, selecting an integration time (i.e., emission time) with which a distance can be calculated with predetermined accuracy and an emission cycle satisfying eye-safety standards with the integration time, as an light pulse emission condition, and emitting the light pulses according to the light pulse condition and distributing the charge generated in the photoelectric conversion element PD at each emission to the charge storage units for integration therein in the ranging charge acquisition mode. Thus, a satisfactory integration time for integrating charge required for measuring a distance can be obtained, and personal safety standards (eye-safety standards) can be satisfied even when pulsed light is continuously emitted. As an light pulse emission condition in the determined measurement zone, an integration time (i.e., emission time) with which a distance can be calculated with predetermined accuracy, and an emission cycle satisfying eye-safety standards with the integration time is selected.

Also, for the configuration including three or more pixel signal readouts RU, processing similar to the present embodiment may be performed by suitably setting integration times for respective ambient light intensities (external light intensities) in the integration time table of each measurement zone, and selecting an integration time corresponding to the ambient light intensity measured in the light pulse emission condition selection mode. Thus, the charge storage units can be easily prevented from being saturated due to ambient light.

The configuration described in the first and second embodiments includes four pixel signal readouts RU1 to RU4, and the pixel signal readout RU1 is dedicated to measurement of ambient light. For a configuration including three or more pixel signal readouts RU, none of the pixel signal readouts RU has to be dedicated to ambient light use, but a comparison may be made between the pixel signal readouts RU for the integrated charges. As a result, even in a configuration in which a pixel signal readout RU with smallest integrated charge is selected as a pixel signal readout RU for reading ambient light, a satisfactory integration time can be calculated with which charge required for measuring a distance can be integrated in the charge storage units, and which can satisfy personal safety standards (eye-safety standards) even when pulsed light is continuously emitted and can prevent saturation of the charge storage units CS.

[Industrial Applicability]

The present invention has been made in light of such circumstances and aims to provide a range imaging device and a range imaging method which can satisfy personal safety standards (eye-safety standards) even when pulsed light is continuously emitted, and can provide a satisfactory integration time with which electrical charge required for measuring a distance can be integrated in the charge storage units.

[Reference Signs List]

| | |
|---|---|
| 1 | Range imaging device |
| 2 | Light source unit |
| 3 | Light-receiving unit |
| 31 | Lens |
| 32 | Range image sensor (range imaging device) |
| 321 | Pixel circuit |
| 322 | Pixel drive circuit |
| 4 | Range image processing unit |
| 41 | Timing control unit |
| 42 | Distance calculation unit |
| 43 | Measurement control unit |
| 431 | Initial operating condition setting section |
| 432 | Zone determination section |
| 433 | Zone operating condition setting section |
| 434 | Operation control section |
| 435 | Initial value storage |
| 436 | one-specific operating condition storage |
| CS1, CS2, CS3, CS4 | Charge storage unit |
| FD1, FE2, FD3, FD4 | Floating diffusion |
| G1, G2, G3, G4 | Transfer transistor |
| GD | Charge discharge transistor |
| PD | Photoelectric conversion element |
| PO | Light pulses |
| RL | Reflected light |
| RT1, RT2, RT3, RT4 | Reset transistor |
| S | Object |
| SF1, SF2, SF3, SF4 | Source follower transistor |
| SL1, SL2, SL3, SL4 | Selection transistor |

**Claims**

**1.** A range imaging device comprising

a light-receiving unit including

18

at least one pixel circuit including a photoelectric conversion element that generates charge according to incident light incident from a measurement space that is a space targeted for measurement, N (N≥3) charge storage units that integrate the charge in a frame cycle, and transfer transistors that transfer the charge to the charge storage units from the photoelectric conversion element, and

a pixel drive circuit that turns on or off the transfer transistors for the charge storage units at predetermined integration timing synchronizing with emission of light pulses to distribute and integrate the charge;

a light source unit that emits the light pulses to the measurement space;

a range image processing unit that calculates a distance to an object that is present in the measurement space as a measurement distance, based on charge integrated in each of the charge storage units; and

a measurement control unit that determines a measurement zone, to which the measurement distance belongs, from among measurement zones which are set according to zone thresholds which are set according to multiple distances from the light-receiving unit, integrates the charge according to an integration time set in the measurement zone as determined, and emits the light pulses by increasing a pulse period of the light pulses according to increase of the integration time.

2. The range imaging device according to claim 1, wherein
the measurement control unit determines the measurement zone in which the measurement distance is included by comparing each of the zone thresholds with the measurement distance which is measured to be nearest in an arbitrary region in which the at least one pixel circuit is arranged.

3. A range imaging device comprising

a light-receiving unit including

at least one pixel circuit including a photoelectric conversion element that generates charge according to incident light incident from a measurement space that is a space targeted for measurement, N (N≥3) charge storage units that integrate the charge in a frame cycle, and transfer transistors that transfer the charge to the charge storage units from the photoelectric conversion element, and

a pixel drive circuit that turns on or off the transfer transistors for the charge storage units at predetermined integration timing synchronizing with emission of light pulses to distribute and integrate the charge;

a light source unit that emits the light pulses to the measurement space;

a range image processing unit that calculates a distance to an object that is present in the measurement space as a measurement distance, based on charge integrated in each of the charge storage units; and

a measurement control unit that calculates total charge generated due to reflected light arising from reflection of the light pulses from an object in the measurement space, determines a measurement zone to which the total charge belongs using a zone threshold that is set according to the total charge, integrates the charge according to an integration time set in the measurement zone as determined, and emits the light pulses by increasing a pulse period of the light pulses according to increase of the integration time.

4. The range imaging device according to claim 3, wherein
the measurement control unit determines the measurement zone in which the total charge is included by calculating a charge ratio between greatest total charge in an arbitrary region in which the at least one pixel circuit is arranged, and reference charge that is charge generated due to reflected light arising from reflection of the light pulses from an object having an arbitrary distance and reflectance, and comparing the charge ratio with each of the zone thresholds.

5. The range imaging device according to any one of claims 1 to 4, wherein
the measurement control unit calculates ambient light charge that is charge corresponding to ambient light based on integrated charge in the charge storage units, and selects a combination corresponding to the ambient light charge from among multiple combinations of the integration time and the pulse period in each of the measurement zones.

6. The range imaging device according to claim 4, wherein
the reference charge is set by acquiring charge generated due to reflected light from an object, using a pulse width of light pulses per unit integration time, on-time of the transfer transistors when distributing charge to the charge storage units, and the integration time in terms of unit integration time, the reference charge being set as a value smaller than storage capacity of the charge storage units.

7. The range imaging device according to claim 4 or 6, wherein
the total charge is calculated by subtracting charge generated due to ambient light from integrated charge that is charge integrated in each of the charge storage units, and adding subtraction results.

8. The range imaging device according to any one of claims 1 to 7, wherein
exposure of an object to emitted light pulses is adjusted by allowing an emission cycle of light pulses to correspond to each of the integration times for the measurement zone, with a pulse width of the light pulses per unit integration time and on-time of the transfer transistors being constant.

9. The range imaging device according to any one of claims 4, 6 and 7, wherein
setting the reference charge for each of a predetermined distance and a predetermined reflectance, the charge ratio has a correlation with an attenuation rate according to the distance and an attenuation rate according to the reflectance.

10. The range imaging device according to claim 1 or 2, wherein
the measurement control unit uses the integration time selected in the measurement zone during a predetermined period, or continuously uses the integration time until the measurement distance is detected to be within a distance range of a measurement zone which is different from the current measurement zone.

11. The range imaging device according to any one of claims 4, 6, 7 and 9, wherein
the measurement control unit uses the integration time selected in the measurement zone during a predetermined period, or continuously uses the integration time until the charge ratio is detected to be within a measurement zone which is different from the current measurement zone.

12. The range imaging device according to any one of claims 1 to 11, wherein
the pixel circuit is provided with a charge discharge circuit that discharges the charge that is generated in the photoelectric conversion element other than in a charge integration period of the charge storage units.

13. A range imaging method that controls a range imaging device including at least one pixel circuit, a light source unit, a pixel drive circuit, a range image processing unit, and a measurement control unit, the at least one pixel circuit including a photoelectric conversion element, a plurality of charge storage units, and transfer transistors, the method comprising steps of:

emitting light pulses to a measurement space that is a space targeted for measurement, as performed by the light source unit;
turning on or off the transfer transistors that transfer charge to N (N≥3) charge storage units from the photoelectric conversion element, the charge being generated by the photoelectric conversion element at predetermined timing synchronizing with emission of the light pulses, according to incident light incident from the measurement space, as performed by the pixel drive circuit;
calculating a distance to an object present in the measurement space as a measurement distance, based on charge integrated in each of the charge storage units, as performed by the range image processing unit; and
determining which of the measurement zones the measurement distance belongs to, the measurement zones each being set according to zone thresholds that are set according to multiple distances from the range imaging device, integrating the charge according to an integration time set in the measurement zone as determined, and emitting the light pulses by increasing a pulse period of the light pulses with increase of the integration time, as performed by the measurement control unit.

14. A range imaging method that controls a range imaging device including at least one pixel circuit, a light source unit, a pixel drive circuit, a range image processing unit, and a measurement control unit, the at least one pixel circuit including a photoelectric conversion element, a plurality of charge storage units, and transfer transistors, the method comprising steps of:

emitting light pulses to a measurement space that is a space targeted for measurement, as performed by the light source unit;
turning on or off the transfer transistors that transfer charge to N (N≥3) charge storage units from the photoelectric conversion element, the charge being generated by the photoelectric conversion element at predetermined timing synchronizing with emission of the light pulses, according to incident light incident from the measurement space, as performed by the pixel drive circuit;

calculating a distance from the range imaging device to an object present in the measurement space as a measurement distance, based on charge integrated in each of the charge storage units, as performed by the range image processing unit; and

calculating total charge generated due to reflected light arising from reflection of the light pulses from an object in the measurement space, based on charge integrated in each of the charge storage units, determining which of the measurement zones the total charge belongs to using a zone threshold that is set according to the total charge, integrating the charge according to an integration time set in the measurement zone as determined, and emitting the light pulses by increasing a pulse period of the light pulses with increase of the integration time, as performed by the measurement control unit.

EP 4 283 339 A1

# FIG.1

- RANGE IMAGING DEVICE — 1
  - LIGHT SOURCE UNIT — 2
    - DIFFUSER PLATE — 22
    - LIGHT SOURCE DEVICE — 21
  - LIGHT-RECEIVING UNIT — 32
    - LENS — 31
    - PIXEL CIRCUIT — 321
    - PIXEL DRIVE CIRCUIT — 322
    - RANGE IMAGE SENSOR — 3
  - RANGE IMAGE PROCESSING UNIT — 4
    - TIMING CONTROL UNIT — 41
    - DISTANCE CALCULATION UNIT — 42
    - MEASUREMENT CONTROL UNIT — 43

S
P0
RL

# FIG.2

# FIG.3

EP 4 283 339 A1

# FIG.4

43

| 431 | 434 |
|---|---|
| INITIAL OPERATING CONDITION SETTING SECTION | OPERATION CONTROL SECTION |

| 432 | 435 |
|---|---|
| ZONE DETERMINATION SECTION | INITIAL VALUE STORAGE |

| 433 | 436 |
|---|---|
| ZONE OPERATING CONDITION SETTING SECTION | ZONE-SPECIFIC OPERATING CONDITION STORAGE |

FIG.5

PULSE PERIOD [ns]

INTEGRATION COUNT

8ns    12ns    16ns    20ns

## FIG.6

SHORTER DISTANCE ← → LONGER DISTANCE

DISTANCE THRESHOLD LB1   DISTANCE THRESHOLD LB1

RANGE IMAGING DEVICE

MEASUREMENT ZONE Z1   MEASUREMENT ZONE Z2   MEASUREMENT ZONE Z3

## FIG.7A

MEASUREMENT ZONE Z1

| EXTERNAL LIGHT INTENSITY | | INTEGRATION COUNT |
|---|---|---|
| Lux | EXTERNAL LIGHT SIGNAL LEVEL | |
| 100,000 Lux | 3000 LSB | 15000 |
| 30,000 Lux | 1000 LSB | 25000 |
| 10,000 Lux | 300 LSB | 30000 |
| NO EXTERNAL LIGHT | 0 LSB | 35000 |

INTEGRATION CYCLE 90 nm

## FIG.7B

MEASUREMENT ZONE Z2

| EXTERNAL LIGHT INTENSITY | | INTEGRATION COUNT |
|---|---|---|
| Lux | EXTERNAL LIGHT SIGNAL LEVEL | |
| 100,000 Lux | 3000 LSB | 20000 |
| 30,000 Lux | 1000 LSB | 35000 |
| 10,000 Lux | 300 LSB | 45000 |
| NO EXTERNAL LIGHT | 0 LSB | 60000 |

INTEGRATION CYCLE 100 nm

## FIG.7C

MEASUREMENT ZONE Z3

| EXTERNAL LIGHT INTENSITY | | INTEGRATION COUNT |
|---|---|---|
| Lux | EXTERNAL LIGHT SIGNAL LEVEL | |
| 100,000 Lux | 3000 LSB | 50000 |
| 30,000 Lux | 1000 LSB | 100000 |
| 10,000 Lux | 300 LSB | 140000 |
| NO EXTERNAL LIGHT | 0 LSB | 170000 |

INTEGRATION CYCLE 110 nm

# FIG.8

START

ACQUIRE INITIAL OPERATING OPTICAL PULSE EMISSION CONDITION — S1

ACQUIRE RE. ERENCE MEASUREMENT DISTANCE — S2

SELECT MEASUREMENT ZONE — S3

SELECT INTEGRATION FACTOR — S4

SET OPERATING OPTICAL PULSE EMISSION CONDITION — S5

PERFORM RANGING PROCESSING ACCORDING TO OPERATING OPTICAL PULSE EMISSION CONDITION — S6

CHANGE MEASUREMENT ZONE ? — S7 — NO

YES

# FIG.9

HIGHER-INTENSITY REFLECTED LIGHT RL ←——————————————→ LOWER-INTENSITY REFLECTED LIGHT RL

SELECT INTEGRATION FACTOR LC1        SELECT INTEGRATION FACTOR LC2

MEASUREMENT ZONE Z1    MEASUREMENT ZONE Z2    MEASUREMENT ZONE Z3

28

# FIG.10

```
         ( START )
            │
            ▼
┌──────────────────────────────┐  S11
│ ACQUIRE INITIAL OPERATING OPTICAL PULSE │
│        EMISSION CONDITION        │
└──────────────────────────────┘
            │
            ▼
┌──────────────────────────────┐  S12
│     ACQUIRE INTEGRATED CHARGE    │
└──────────────────────────────┘
            │
            ▼
┌──────────────────────────────┐  S13
│      SELECT MEASUREMENT ZONE     │
└──────────────────────────────┘
            │
            ▼
┌──────────────────────────────┐  S14
│      SELECT INTEGRATION FACTOR   │
└──────────────────────────────┘
            │
            ▼
┌──────────────────────────────┐  S15
│   SET OPERATING OPTICAL PULSE    │
│        EMISSION CONDITION        │
└──────────────────────────────┘
            │
            ▼
┌──────────────────────────────┐  S16
│ PERFORM RANGING PROCESSING ACCORDING TO │
│ OPERATING OPTICAL PULSE EMISSION CONDITION │
└──────────────────────────────┘
            │
            ▼
        ╱ CHANGE MEASUREMENT ╲  S17    NO
        ╲      ZONE ?        ╱
            │
           YES
```

## INTERNATIONAL SEARCH REPORT

| International application No. |
| --- |
| **PCT/JP2022/002258** |

| A. CLASSIFICATION OF SUBJECT MATTER |
| --- |
| *G01S 17/894*(2020.01)i; *G01S 7/483*(2006.01)i; *H04N 5/374*(2011.01)n <br> FI: G01S17/894; G01S7/483; H04N5/374 |
| According to International Patent Classification (IPC) or to both national classification and IPC |

| B. FIELDS SEARCHED |
| --- |
| Minimum documentation searched (classification system followed by classification symbols) <br>     G01S 7/48 - G01S 7/51, G01S 17/00 - G01S 17/95 |
| Documentation searched other than minimum documentation to the extent that such documents are included in the fields searched <br><br>     Published examined utility model applications of Japan 1922-1996 <br>     Published unexamined utility model applications of Japan 1971-2022 <br>     Registered utility model specifications of Japan 1996-2022 <br>     Published registered utility model applications of Japan 1994-2022 |
| Electronic data base consulted during the international search (name of data base and, where practicable, search terms used) |

| C. DOCUMENTS CONSIDERED TO BE RELEVANT |

| Category* | Citation of document, with indication, where appropriate, of the relevant passages | Relevant to claim No. |
| --- | --- | --- |
| Y | WO 2019/078366 A1 (UNIV SHIZUOKA NAT UNIV CORP) 25 April 2019 (2019-04-25) <br>     paragraphs [0012]-[0023], [0032]-[0041], [0054], [0057], fig. 5 | 1-2, 8, 10. 12-13 |
| Y | WO 2017/110413 A1 (KOITO MFG CO LTD) 29 June 2017 (2017-06-29) <br>     paragraphs [0070]-[0072], [0080], [0087]-[0088] | 1-2, 8, 10, 12-13 |
| Y | JP 2010-256291 A (TOYOTA MOTOR CORP) 11 November 2010 (2010-11-11) <br>     paragraphs [0002]-[0003], [0075]-[0077] | 1-2, 8, 10, 12-13 |
| X <br><br> A | WO 2016/208214 A1 (MURATA MANUFACTURING CO) 29 December 2016 (2016-12-29) <br>     paragraphs [0013]-[0043], [0059]-[0084], [0118]-[0120], [0146], [0156], fig. 10 | 3, 5, 14 <br><br> 4, 6-7, 9, 11 |
| A | US 2020/0018834 A1 (ROCKWELL AUTOMATION TECHNOLOGIES, INC.) 16 January 2020 (2020-01-16) <br>     paragraphs [0073]-[0212], fig. 4-21C | 1-14 |
| P, A | JP 2021-148745 A (RICOH CO LTD) 27 September 2021 (2021-09-27) <br>     paragraphs [0009]-[0091], fig. 1-15 | 1-2, 5, 8, 10, 12-13 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **21 February 2022** | **08 March 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
**Information on patent family members**

International application No.

**PCT/JP2022/002258**

| Patent document cited in search report | | | Publication date (day/month/year) | Patent family member(s) | | | Publication date (day/month/year) |
|---|---|---|---|---|---|---|---|
| WO | 2019/078366 | A1 | 25 April 2019 | US | 2020/0278194 | A1 | |
| | | | | paragraphs [0029]-[0040], [0049]-[0058], [0072], [0075], fig. 5 | | | |
| | | | | CN | 111226434 | A | |
| WO | 2017/110413 | A1 | 29 June 2017 | US | 2019/0004149 | A1 | |
| | | | | paragraphs [0090]-[0092], [0104], [0111]-[0114] | | | |
| | | | | JP | 6868570 | B2 | |
| | | | | EP | 3396410 | A1 | |
| | | | | CN | 108431631 | A | |
| JP | 2010-256291 | A | 11 November 2010 | (Family: none) | | | |
| WO | 2016/208214 | A1 | 29 December 2016 | US | 2018/0045513 | A1 | |
| | | | | paragraphs [0033]-[0063], [0079]-[0104], [0141]-[0143], [0169], [0179], fig. 10 | | | |
| | | | | JP | 6406449 | B2 | |
| | | | | CN | 107533136 | A | |
| US | 2020/0018834 | A1 | 16 January 2020 | EP | 3594716 | A1 | |
| JP | 2021-148745 | A | 27 September 2021 | (Family: none) | | | |

Form PCT/ISA/210 (patent family annex) (January 2015)

31

**REFERENCES CITED IN THE DESCRIPTION**

**Patent documents cited in the description**

- JP 2021008798 A
- JP 2004294420 A
- JP 2012185171 A